Europäisches Patentamt

European Patent Office

Office européen des brevets

(19)

(11) **EP 1 479 148 B1**

(12) **EUROPÄISCHE PATENTSCHRIFT**

(45) Veröffentlichungstag und Bekanntmachung des Hinweises auf die Patenterteilung:
**26.10.2005  Patentblatt 2005/43**

(51) Int Cl.$^7$: **H02H 3/32**

(21) Anmeldenummer: 03787796.6

(86) Internationale Anmeldenummer:
**PCT/EP2003/009037**

(22) Anmeldetag: **14.08.2003**

(87) Internationale Veröffentlichungsnummer:
**WO 2004/017483 (26.02.2004 Gazette 2004/09)**

(54) **VERFAHREN UND VORRICHTUNG ZUR FEHLERSTROMÜBERWACHUNG IN EINEM ELEKTRISCHEN WECHSELSTROMNETZ**

METHOD AND DEVICE FOR MONITORING FAULT CURRENTS IN AN ELECTRIC AC MAINS

PROCEDE ET DISPOSITIF POUR SURVEILLER LE COURANT DE PERTE DANS UN RESEAU A COURANT ALTERNATIF ELECTRIQUE

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **14.08.2002  DE 10237342**

(43) Veröffentlichungstag der Anmeldung:
**24.11.2004  Patentblatt 2004/48**

(73) Patentinhaber: **Fraunhofer-Gesellschaft zur Förderung der angewandten Forschung e.V. 80686 München (DE)**

(72) Erfinder:
• **HOHE, Hans-Peter**
  **91332 Heiligenstadt (DE)**
• **SAUERER, Josef**
  **91074 Herzogenaurach (DE)**

(74) Vertreter: **Stöckeler, Ferdinand et al Schoppe, Zimmermann, Stöckeler & Zinkler Postfach 246 82043 Pullach bei München (DE)**

(56) Entgegenhaltungen:
**WO-A1-03/100938          WO-A2-01/95451**

**Beschreibung**

Die vorliegende Erfindung bezieht sich auf eine Fehlerstromüberwachung in einem elektrischen Wechselstromnetz, und insbesondere auf die spektrale und phasenrichtige Erfassung von Absolut- und Relativströmen zur Gefahreneinschätzung von Fehlerströmen und für die Beurteilung des Gefährdungspotentials von Fehlerströmen für Mensch und Material.

In der Elektroinstallationstechnik wird die Einschätzung des Gefährdungspotentials durch eine elektrische Anlage, wie z. B. ein elektrisches Wechselstromnetz, auf den Menschen auf der Basis von Momentanwerten der zu überwachenden Ströme in dem Wechselstromnetz durchgeführt. Dies gilt sowohl für Absolutwerte als auch für Relativ- und/oder Differenzwerte der zu überwachenden Ströme, wobei diese Stromwerte auch als Fehlerstrom bezeichnet werden. Diese Art der Gefahrenerkennung wird in Form von Fehlerstromschutzschaltern, die auch als FI-Schalter bezeichnet werden und die den Differenzstrom zwischen einem Hin- und einem Rückleiter messen, eingesetzt.

Ein wesentliches Merkmal jedes Fehlerstromschutzschalters ist dabei der sogenannte Summenstromwandler. Alle stromführenden Leiter einer elektrischen Anlage, einschließlich des Nulleiters, werden gleichsinnig und miteinander durch diesen Wandler geführt. Normale Betriebsströme haben auf diesen Wandler keine Wirkung, da ihre Summe immer einen Wert von "Null" ergibt, d. h. es liegt kein Differenzstrom vor.

Fließt jedoch ein Fehlerstrom, der beispielsweise durch einen Körperschluß verursacht wird, aus dem geschlossenen Stromkreis nach Masse ab, so wird das magnetische Gleichgewicht des Wandlers um den Betrag des nach Masse (Erde) fließenden Fehlerstroms gestört. In diesem Fall wird der Wandler magnetisiert und veranlaßt augenblicklich über einen hochempfindlichen Auslöser die allpolige Ausschaltung des Fehlerstromschutzschalters.

Fehlerstromschutzschalter messen also den Wechselstromanteil des Fehlerstroms, wobei der Fehlerstrom entsprechend seines Betrags als mehr oder weniger gefährlich eingestuft wird. Bei dieser sehr weit verbreiteten Art des Personen- und/oder Materialschutzes wird jedoch der Gleichstromanteil des Fehlerstroms nicht erfaßt und kann deshalb auch nicht richtig bewertet werden.

In der internationalen Patentanmeldung WO98/58432 wird beispielsweise eine Gefahrenerkennung zur Beurteilung des Gefährdungspotentials durch Fehlerströme für Mensch und Material beschrieben, wobei man dort mit einem analogen Verfahren zwischen kapazitiven Blindfehlerströmen, denen ein niedriges Gefährdungspotential für den Menschen zugeordnet wird, und Wirkfehlerströmen, denen ein hohes Gefährdungspotential für den Menschen zugeordnet wird, unterscheidet. Zusätzlich wird bei dem dort beschriebenen Verfahren zwischen einem Wechselstrom- und einem Gleichstromanteil unterschieden. Der Wechselstromanteil wird über die zugehörige Phase in einen Wirk- und einen Blindstrom zerlegt. Dies erhöht die Toleranz gegenüber kapazitiven Blindströmen, die als potentiell weniger gefährlich eingestuft werden, da sie nicht von einem Körperstrom herrühren können. Damit ist es möglich, eine Auslösung bei sehr niedrigen Wirkfehlerströmen zu erreichen, wobei gleichzeitig eine relativ hohe Toleranz gegenüber kapazitiven Fehlerströmen besteht.

In der genannten internationalen Patentanmeldung wird ferner ein möglicher Ansatz dargestellt, um auch Gleichströme erfassen und bewerten zu können. Gleichströme verändern nicht mehr das Verhalten für Wechselströme, wobei Wechselströme phasenrichtig bewertet werden können. Da aber eine Phasenbeziehung im strengen Sinne nur bei monofrequenten Signalen definiert ist, werden höher frequente Ströme mit der auf die Netzfrequenz (z. B. 50 Hz) bezogenen Phase falsch bewertet. Insbesondere pulsförmige Ströme mit Signalanteilen auf höheren Frequenzen, wie sie von modernen Schaltnetzteilen für Computer, Fernsehgeräte, usw. und von Phasenanschnittsteuerungen für Bohrmaschinen, Elektroherde, Dimmer, usw. hervorgerufen werden, führen bei dieser Auswertung zu Problemen, da sie nicht getrennt erfaßt werden.

Es ist zwar möglich, eine frequenzabhängige Gewichtung des Fehlerstroms vorzunehmen, diese Gewichtung muß jedoch durch aufwendige Filter analog realisiert werden. Zusätzlich wird das gewichtete Gesamtsignal für den Wechselstromanteil anschließend ohne Beachtung der spektralen Zusammensetzung in einen Wirk- und einen Blindstromanteil aufgetrennt. Dies erfolgt z. B. auch in den Fällen, in denen überhaupt kein Anteil mit der Netzfrequenz in dem gemessenen Fehlerstrom enthalten ist, und führt demzufolge zu gravierenden Fehlbewertungen des Fehlerstroms, was wiederum eine korrekte und zuverlässige Beurteilung des Gefährdungspotentials für Mensch und Material stark beeinträchtigt.

Die Nächteile von gegenwärtig eingesetzten Fehlerstromschutzschaltern (FI-Schaltern) gemäß dem Stand der Technik beruhen also darauf, daß häufig nur der Wechselstromanteil des Fehlerstroms und dieser auch nur seinem Betrag nach gemessen wird. Da die Phase des gemessenen Wechselstromanteils des Fehlerstroms nicht berücksichtigt wird, kann also im wesentlichen keine Einteilung in einen Wirk- und Blindanteil des Fehlerstroms erfolgen. Dies führt daher bei einer für den menschlichen Schutz ausgelegten, sehr niedrigen Abschaltschwelle des Fehlerstromschutzschalters zu relativ häufigen Fehlauslösungen der Schutzeinrichtung. Ein Anheben der Auslöseschwelle verringert zwar die Häufigkeit der Fehlauslösung, aber auch gleichzeitig die Schutzwirkung für den Menschen.

Ferner werden Gleichströme bei der in der Hausinstallationstechnik, z. B. für Badezimmer, vorgeschriebenen Art von Fehlerstromschutzschaltern entweder überhaupt nicht oder nur äußerst unzureichend erkannt. Ein Schutz beteiligter Menschen vor Gleichströmen kann also grundsätzlich nicht ausreichend erreicht werden, obwohl die Häufigkeit solcher überlagerter Gleichströme derzeit wieder ansteigt. Von noch größerer Bedeutung für ein verbleibendes Gefährdungspotential ist die Tatsache, daß der in den Schutzschaltern verwendete Ringkern des Summenstromwandlers bei einer von außen nicht wahrnehmbaren Gleichstrombelastung in Sättigung gehen kann und damit die Schutzwirkung auch bei Wechselströmen vermindert oder sogar beseitigt werden kann. Herkömmliche Fehlerstromschutzschalter stellen daher in diesem Fall eher eine große Gefährdung als einen Schutz für Menschen dar, weil der vermeintliche Schutz (von außen nicht wahrnehmbar) nicht mehr vorhanden ist.

Einen möglichen Ansatz zur Verringerung dieses Problems stellen sogenannte pulsstromsensitive Schutzschalter dar.

Diese Schutzschalter können pulsierende Gleichströme erkennen. Reine Gleichströme können aber auch von diesen pulsstromsensitiven Schutzschaltern nicht gemessen werden.

Ausgehend von diesem Stand der Technik besteht die Aufgabe der vorliegenden Erfindung darin, ein verbessertes Konzept zur Fehlerstromüberwachung in einem elektrischen Wechselstromnetz zu schaffen, um mittels der Fehlerstromüberwachung eine sicherere und zuverlässigere Beurteilung des Gefährdungspotentials für Menschen und Material zu gewährleisten.

Diese Aufgabe wird durch ein Verfahren zur Fehlerstromüberwachung gemäß Anspruch 1 und durch eine Vorrichtung zur Fehlerstromüberwachung gemäß Anspruch 11 gelöst.

Bei dem erfindungsgemäßen Verfahren zur Fehlerstromüberwachung in einem elektrischen Wechselstromnetz mit einer vorgegebenen Netzfrequenz werden zunächst Stromwerte von zu überwachenden elektrischen Strömen erfaßt. Die erfaßten Stromwerte werden daraufhin in diskrete, digitalisierte Stromwerte umgewandelt, wobei aus den digitalisierten Stromwerten Summenstromwerte berechnet werden. Aus den Summenstromwerten werden in Abhängigkeit von der Phasenlage eines Netzspannungssignals Blöcke gebildet, woraufhin diese Blöcke aus den Summenstromwerten in deren spektrale Anteile zerlegt werden. Schließlich werden die spektralen Anteile der Blöcke hinsichtlich eines Überschreitens von spektralen Grenzwerten überwacht, um die Gefährlichkeit des Fehlerstroms zu bewerten.

Die erfindungsgemäße Vorrichtung zur Fehlerstromüberwachung in einem elektrischen Wechselstromnetz mit einer vorgegebenen Netzfrequenz umfaßt eine Einrichtung zum Erfassen von Stromwerten von zu überwachenden, elektrischen Strömen, eine Einrichtung zum Umwandeln der erfaßten Stromwerte in digitalisierte Stromwerte, eine Einrichtung zum Berechnen von Summenstromwerten aus den digitalisierten Stromwerten, eine Einrichtung zum Bilden von Blöcken aus den Summenstromwerten in Abhängigkeit von der Phasenlage eines Netzspannungssignals, eine Einrichtung zum spektralen Zerlegen der Blöcke in spektrale Anteile, und eine Einrichtung zum Überwachen der spektralen Anteile der Blöcke hinsichtlich eines Überschreitens spektraler Grenzwerte zur Bewertung der Gefährlichkeit des Fehlerstroms.

Der vorliegenden Erfindung liegt die Erkenntnis zugrunde, daß ein Verfahren zur spektralen Zerlegung und Aufspaltung von Signalen in seine einzelnen Spektralanteile mittels einer Fourier-Transformation im Rahmen der Gefahrenbewertung eines Fehlerstroms bei einer Fehlerstromüberwachung in einem elektrischen Wechselstromnetz angewendet werden kann, wobei es vorteilhaft ist, wenn eine oder mehrere geeignete Gewichtungsfunktionen für die Gefahrenbewertung des Fehlerstroms gefunden und angewendet werden können.

Die Signale, d. h. die zu überwachenden elektrischen Ströme in einem elektrischen Wechselstromnetz, welche der eigentlichen Gefahrenbewertung zugeführt werden sollen, werden zunächst mit entsprechenden Sensoren erfaßt, danach (wenn erforderlich) verstärkt und schließlich in einen diskreten Digitalwert umgesetzt. Für die Fehlerstromüberwachung wird nun aus den Digitalwerten der einzelnen Ströme ein Summenstrom berechnet. Die Summenstromwerte werden daraufhin synchron zur Frequenz des Netzspannungssignals in Blöcke mit vorzugsweise fester Länge aufgeteilt. Dies kann überlappend oder einfach sequentiell erfolgen. Ein Block enthält dabei immer alle Summenstromwerte während einer Periode des Netzspannungssignals, beispielsweise zwischen zwei gleichartigen Nulldurchgängen der Netzspannung. Diese Blöcke der Summenstromwerte werden dann mittels einer diskreten Fourier-Transformation in deren spektrale Anteile zerlegt.

An dieser Stelle kann nun sehr einfach eine unterschiedliche Gewichtung des Wirk- und Blindstromanteils des Summenstroms, d. h. des Fehlerstroms, durchgeführt werden, indem dazu der Real- oder Imaginärteil der jeweiligen Spektrallinie des Fehlerstroms mit einem geeigneten Gewichtungsfaktor multipliziert wird. Um beispielsweise die Auslöseschwelle für kapazitive (oder induktive) Blindströme zu verdoppeln, muß man den Imaginärteil der Netzfrequenzkomponente (d. h. der 50Hz-Komponente bei einer 50Hz-Netzfrequenz) mit 0,5 multiplizieren.

An die optional durchzuführende Gewichtung wird nun anschließend eine Grenzwertüberwachung der spektralen Anteile der Blöcke hinsichtlich eines Überschreitens von spektralen Grenzwerten durchgeführt, um die Gefährlichkeit des Fehlerstroms zu beurteilen.

Wenn nun das zu messende Signal, d. h. der Fehlerstrom, eine Frequenz von 50 Hz (Netzfrequenz) enthält, dann wird mittels der diskreten Fourier-Transformation exakt der richtige Wert der betreffenden Spektrallinie ermittelt.

Liegt die Signalfrequenz des Summenstroms allerdings beispielsweise bei einer Frequenz von 75 Hz (unter der Annahme einer Netzfrequenz von 50 Hz), d. h. ist die Signalfrequenz des Fehlerstroms kein ganzzahliges Vielfaches der Netzfrequenz, dann wird die Abschaltschwelle des Fehlerstromüberwachungsverfahrens aufgrund der niedrigeren Empfindlichkeit der 50Hz-Linie (und der benachbarten 100Hz-Linie) auf dieser Frequenz (75 Hz) deutlich angehoben. Damit hängt die Abschaltschwelle zwischen den Spektrallinien deutlich von der Signalfrequenz des Summenstroms ab, was dazu führt, daß bei einem weiteren erfindungsgemäßen Aspekt des Verfahrens zur Fehlerstromüberwachung in einem elektrischen Wechselstromnetz nach dem Zerlegen der Blöcke in spektrale Anteile eine Korrektur der Erfassungsempfindlichkeit für die Fehlerströme mit Frequenzen zwischen aufeinanderfolgenden Vielfachen der Netzfrequenz vorgenommen wird, indem Spektralamplitudenwerte, die den benachbarten Spektrallinien zugeordnet sind, miteinander kombiniert werden. Eine solche spektrale Kombination wird im folgenden allgemein als "Abbildung" bezeichnet.

Mit dieser sogenannten "Abbildung" führt die Aneinanderreihung mehrerer Spektrallinien zu einem im wesentlichen konstanten Abschaltwert. Eine mögliche Realisierung für eine solche Abbildung besteht nun darin, die beiden Beträge bzw. Betragsquadrate von jeweils benachbarten Spektrallinien, die ein ganzzahliges Vielfaches der Netzfrequenz aufweisen, nach der diskreten Fourier-Transformation zu addieren.

Der resultierende Wert ist dann ein gutes Maß mit einem Fehler von maximal etwa ±5% für die vorhandene Signalamplitude zwischen den beiden benachbarten diskreten Frequenzen, d. h. benachbarten ganzzahligen Vielfachen der Netzfrequenz.

Man besitzt damit eine Aussage über die Summe der vorhandenen Signalamplituden im Intervall zwischen den beiden benachbarten Frequenzen. Dieser Summenwert kann dann beispielsweise durch einen Komparator auf das Überschreiten eines bestimmten, vorgegebenen Grenzwerts hin überwacht werden.

Es ist ferner möglich, unterschiedliche Abschaltschwellen für unterschiedliche Frequenzbereiche zu realisieren. Damit können hochfrequente Fehlerströme, die beispielsweise von geschalteten Elementen herrühren, schwächer gewichtet werden, um die Häufigkeit von Fehlauslösungen zu reduzieren, ohne die Sicherheit für den Menschen zu verringern.

Mit dem erfindungsgemäßen Verfahren ist es ferner auch möglich, Gleichströme gezielt zu erfassen und zu bewerten, da bei der Signalerfassung durch einzelne Sensoren nun auch gleichstromfähige Sensoren eingesetzt werden können.

Mit der Möglichkeit beliebige spektrale Gewichtungsfunktionen realisieren zu können, ist es auch möglich, die Kennlinie der physiologischen Gefährdung des Menschen durch Fehlerströme in Abhängigkeit von der Frequenz nachzubilden. Wenn dies durchgeführt wird, so kombiniert man einerseits eine hohe Sicherheit für den Menschen mit einer optimal niedrigen Häufigkeit für Fehlauslösungen und damit mit einer hohen Akzeptanz des Schutzsystems.

Es wird ersichtlich, daß das erfindungsgemäße Konzept zur Fehlerstromüberwachung in einem elektrischen Wechselstromnetz eine Reihe von Vorteilen gegenüber bisher im Stand der Technik bekannten Vorgehensweisen zur Fehlerstromüberwachung liefert. Der Hauptvorteil gegenüber dem Stand der Technik liegt also darin, daß mit dem erfindungsgemäßen Konzept zur Fehlerstromüberwachung nun eine gezielte und damit auch entsprechend den physiologischen Erkenntnissen richtige Bewertung des Gefährdungspotentials aller Spektralanteile von Fehlerströmen möglich ist. Damit ist die größtmögliche Sicherheit für den Anwender mit einer geringst möglichen Anzahl von Fehlauslösungen der Fehlerstromüberwachung vereinbar.

Selbst bei kritischen Anwendungen, wie z. B. systembedingten hohen Fehlerströmen auf bestimmten Frequenzen, wie z. B. der PWM-Frequenz bei Drehstromantrieben (PWM = Pulsweitenmodulation), bei denen bislang mit herkömmlichen Fehlerstromschutzanordnungen eine Schutzfunktion nicht mehr ausreichend gewährleistet werden konnte, kann mit dem erfindungsgemäßen Konzept zur Fehlerstromüberwachung zur Beurteilung der Gefährlichkeit des Fehlerstroms noch ein ausreichend guter Schutz erreicht werden, indem die betreffende Frequenz bzw. die betreffenden Frequenzen (und ausschließlich diese) komplett ausgeblendet oder geringer gewichtet werden. Solange sich die problematischen Wirkstromanteile nicht auf der Netzfrequenzlinie, d. h. beispielsweise der 50-Hz-Linie, befinden, kann trotzdem ein wirksamer Schutz für Menschen erhalten werden.

Bevorzugte Ausführungsbeispiele der vorliegenden Erfindung werden nachfolgend unter Bezugnahme auf die beiliegenden Zeichnungen näher erläutert. Es zeigen:

Fig. 1    ein Flußdiagramm des Verfahrens zur Fehlerstromüberwachung in einem Wechselstromnetz gemäß einem bevorzugten Ausführungsbeispiel der vorliegenden Erfindung;

Fig. 2    den Betrag einer Spektrallinie für Signale mit unterschiedlichen Frequenzen aber konstanter Amplitude;

Fig. 3    den Betrag der spektralen Gewichtung zwischen zwei benachbarten Spektrallinien (50Hz- und 100Hz-Spektrallinie) nach einer diskreten Fourier-Transformation gemäß einem Ausführungsbeispiel der vorliegenden Erfindung; und

Fig. 4    eine Prinzipdarstellung der gesamten spektralen Kombination (Überlappung) im Bereich von Gleichstrom (DC) bis 750 Hz gemäß einem Ausführungsbeispiel der vorliegenden Erfindung.

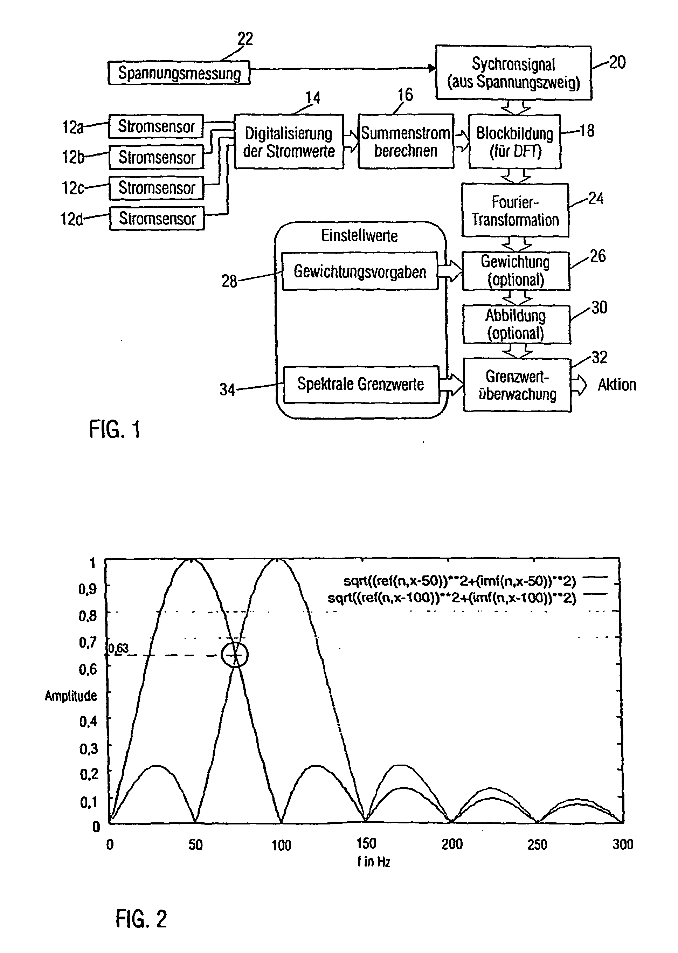

Im folgenden wird nun anhand von Fig. 1 ein bevorzugtes Ausführungsbeispiel des Verfahrens zur Fehlerstromüberwachung in einem elektrischen Wechselstromnetz mit einer vorgegebenen Netzfrequenz gemäß der vorliegenden Erfindung beschrieben.

Anhand des Flußdiagramms von Fig. 1 wird die prinzipielle Vorgehensweise für eine mehrkanalige Fehlerstromüberwachung, d. h. Differenzstromüberwachung, in einem geerdeten, ein- oder mehrphasigen elektrischen Wechselstromnetz mit einer vorgegebenen Netzfrequenz beschrieben, wobei bei dem dargestellten Ausführungsbeispiel von Fig. 1 beispielsweise eine 4-kanalige Differenzstromüberwachung durchgeführt wird. Es sollte beachtet werden, daß die vorliegende Erfindung auf Differenzstromüberwachung mit einer beliebigen Anzahl von Kanälen anwendbar ist. Ferner wird in der folgenden Beschreibung von einer Netzfrequenz von 50 Hz ausgegangen, wobei beachtet werden sollte, daß die vorliegende Erfindung auf beliebige Netzfrequenzen anwendbar ist.

Wie in den Kästchen 12a-d des Flußdiagramms von Fig. 1 gezeigt ist, beginnt das erfindungsgemäße Verfahren zur Fehlerstromüberwachung in einem elektrischen Wechselstromnetz gemäß dem bevorzugten Ausführungsbeispiel damit, daß mittels Stromsensoren die vier zu überwachenden Ströme, beispielsweise die Ströme von drei Netzleitern und der Strom eines Neutralleiters, vorzeichenrichtig erfaßt werden. Die erfaßten Stromwerte (Momentanwerte) der zu überwachenden Ströme werden daraufhin in diskrete, digitalisierte Stromwerte umgewandelt, wie dies in Kästchen 14 von Fig. 1 dargestellt ist.

Aus den digitalisierten, diskreten Stromwerten der zu überwachenden, elektrischen Ströme werden nun beispielsweise durch Addition die Summenstromwerte berechnet, wie dies in Kästchen 16 von Fig. 1 dargestellt ist. Wie in Kästchen 18 des Blockdiagramms dargestellt ist, werden nun Blöcke aus den Summenstromwerten in Abhängigkeit von der Phasenlage der Netzfrequenz eines Netzspannungssignals gebildet, wobei die Länge der Blöcke von der Phasenlage des Netzspannungssignals abhängt und vorzugsweise eine Periode (oder ein ganzzahliges Vielfaches einer Periode) der Netzfrequenz beträgt. Die Blockbildung kann dabei überlappend oder auch sequentiell erfolgen. Um die Blöcke aus den berechneten digitalen Summenstromwerten synchron zur Netzfrequenz der Netzspannung zu bilden, wird ein Synchronsignal bereitgestellt, wie dies in Kästchen 20 dargestellt ist, wobei das Synchronsignal aus einer Erfassung der Netzfrequenz des Netzspannungssignals erhalten wird, wie dies in Kästchen 22 dargestellt ist.

Das Synchronsignal gibt vorzugsweise eine Periode der Netzspannung an, um den Block aus den berechneten, digitalen Summenstromwerten zu bilden, wobei das Synchronsignal vorzugsweise erhalten wird, indem zwei gleichartige Nulldurchgänge des Netzspannungssignals erfaßt werden, so daß ein Block immer alle berechneten, digitalen Summenstromwerte während einer Periode der Netzspannung aufweist. Es sollte offensichtlich sein, daß die Periode der Netzspannung auch auf eine beliebige andere geeignete Weise aus dem Verlauf des Netzspannungssignals ermittelt werden kann.

Ferner sollte beachtet werden, daß es entsprechend der vorliegenden Erfindung auch möglich ist, die Blockbildung entsprechend Kästchen 18 des Flußdiagramms von Fig. 1 auch über mehrere Perioden des Netzspannungssignals vorzunehmen, wodurch zwar einerseits die Genauigkeit des erfindungsgemäßen Verfahrens zur Fehlerstromüberwachung in einem elektrischen Wechselstromnetz erhöht wird, jedoch andererseits die Weiterverarbeitung der Blöcke aus den berechneten, digitalen Summenstromwerten erheblich aufwendiger gestaltet wird.

Wie in Kästchen 24 dargestellt ist, werden nun die berechneten, digitalisierten Summenstromwerte mittels einer geeigneten Transformation, z. B. einer Fourier-Transformation (DFT = diskrete Fourier-Transformation oder FFT = schnelle Fourier-Transformation), in deren spektrale Anteile zerlegt.

An dieser Stelle des erfindungsgemäßen Verfahrens zur Fehlerstromüberwachung in einem elektrischen Wechselstromnetz kann nun beispielsweise sehr einfach eine unterschiedliche Gewichtung von Wirk- und Blindstromanteil der spektral zerlegten Summenstromwerte durchgeführt werden, indem man beispielsweise den Real- oder Imaginärteil der jeweiligen Spektrallinie eines Summenstromwerts mit einem bestimmten Gewichtungsfaktor multipliziert, wie dies in Kästchen 26 von Fig. 1 optional vorgesehen ist. Als eine Gewichtungsvorgabe (Kästchen 28) kann beispielsweise vorgesehen sein, die Auslöseschwelle für kapazitive (oder induktive) Blindströme zu verdoppeln, so daß beispielsweise der Imaginärteil der Komponente bei der Netzfrequenz, z. B. bei 50 Hz, mit 0,5 multipliziert wird.

An die optionale Gewichtung (Kästchen 26) der jeweiligen Spektralanteile der Summenstromwerte, falls diese durchgeführt wird, oder ansonsten an die Fourier-Transformation schließt nun im allgemeinen eine Grenzwertüberwachung der spektralen Anteile der Blöcke hinsichtlich eines Überschreitens spektraler Grenzwerte an, wie dies in Kästchen 32 dargestellt ist, um die Gefährlichkeit des Fehlerstroms aus den spektralzerlegten Summenstromwerten zu bewerten. Im Fall einer Grenzwertüberschreitung wird dann eine vorgegebene Aktion ausgeführt, wobei als Aktion eine optische oder akustische Warnmeldung generiert werden kann, eine Meldung über ein entsprechendes Netzwerk übermittelt werden kann oder direkt eine Schutzfunktion, z. B. ein allpoliges Abschalten, ausgelöst werden kann.

In dem Flussdiagramm von Fig. 1 ist ferner dargestellt, daß vor der Grenzwertüberwachung der spektralen Anteile der Blöcke hinsichtlich eines Überschreitens spektraler Grenzwerte (Kästchen 32) optional noch eine sogenannte Abbildungsfunktion durchgeführt werden kann, wie dies durch Kästchen 30 des Flussdiagramms von Fig. 1 dargestellt ist. Im folgenden wird nun ausführlich erläutert, unter welchen Vorraussetzungen dieser Schritt des Durchführens einer Abbildungsfunktion (Kästchen 30) erforderlich ist und erfindungsgemäß vorgenommen wird.

Unter der Annahme, daß die Grundwelle der spektralzerlegten Summenstromwerte der Netzfrequenz von beispielsweise 50 Hz entspricht, erhält man den in Fig. 2 dargestellten Betrag der spektralen Gewichtung der einzelnen Spektrallinien nach der diskreten Fourier-Transformation. Wenn man nun davon ausgeht, daß das zu messende Signal, d. h. der berechnete Summenstrom bzw. die berechneten Summenstromwerte (vgl. Kästchen 16), genau die Netzfrequenz von 50 Hz bzw. ein ganzzahliges Vielfaches davon enthält, dann wird mittels der diskreten Fourier-Transformation exakt der richtige Wert der betreffenden Spektrallinie ermittelt. In diesem Fall ist es nicht erforderlich, die Abbildungsfunktion (Kästchen 30 von Fig. 1) durchzuführen.

Liegt allerdings die Signalfrequenz des Summenstroms, d. h. der Summenstromwerte, beispielsweise bei einer Frequenz, die keinem ganzzahligen Vielfachen der Netzgrundfreqenz entspricht, wird, wie es aus Fig. 2 ersichtlich ist, die Abschaltschwelle aufgrund der niedrigeren Empfindlichkeit der Spektrallinien, die einem ganzzahligen Vielfachen der Netzgrundfrequenz entsprechen, auf dieser Frequenz deutlich angehoben.

In diesem Fall wird bei der hier zu realisierenden Version eines FI-Schutzschalters nur ein relativ grober Schwellwert im Zeitbereich realisiert. Die beiden anderen vorgesehenen Schwellwerte beziehen sich auf spektrale Darstellungen des Fehlerstromes. Bei diesen mittels einer Fourier-Transformation (FFT) berechneten Spektrallinien repräsentiert ein Spektralwert (bestehend aus Real- and Imaginärteil) einen bestimmten Frequenzbereich. Dieser Bereich erstreckt sich im konkreten Fall über 50 Hz.

Ideal wäre es, wenn ein monofrequenter Fehlerstrom mit der Amplitude 1, unabhängig von der genauen Frequenz, im Bereich zu einer Spektrallinie auch als Spektralwert einen Wert von 1 liefern wurde. Dies ist jedoch nicht der Fall. Die tatsächlichen Amplitudenverhältnisse können Fig. 2 entnommen werden.

In der Mitte des 50 Hz umfassenden Bereiches ist der Betrag der 50Hz-Spektrallinie genau 1. Hin zu den Rändern fällt der Betrag auf ca. 63% (0,63) ab. Dies bedeutet, daß ein Fehlerstrom mit einer Frequenz von 75 Hz eine um 37% höhere Abschaltschwelle besitzen würde als auf der Nennfrequenz von 50 Hz, da sich, wie in Fig. 2 dargestellt ist, beispielsweise ein 75Hz-Signal gleichmäßig mit einem Wert von etwa 0,63 auf die benachbarte 50Hz- und 100Hz-Spektrallinie aufteilt.

Liegt also beispielsweise die Signalfrequenz des Summenstroms bei einer Frequenz von 75 Hz (vgl. die mit einem Kreis gekennzeichnete Position in Fig. 2), und wird von einer Netzfrequenz von 50 Hz ausgegangen, so hängt die Abschaltschwelle zwischen den Spektrallinien deutlich von der Signalfrequenz ab.

Daher wird bei der vorliegenden Erfindung optional nach dem Zerlegen der Blöcke in spektrale Anteile eine Korrektur der Erfassungsempfindlichkeit für Fehlerströme mit Frequenzen zwischen aufeinanderfolgenden Vielfachen der Netzfrequenz vorgenommen, indem Spektralamplitudenwerte, die den benachbarten Spektrallinien zugeordnet sind, miteinander kombiniert werden. Diese Kombination wird im folgenden allgemein als "Abbildung" bezeichnet (Kästchen 30).

Die kombinierten Spektralamplitudenwerte werden dann bei der vorliegenden Erfindung zur Beurteilung bzw. Bewertung der Gefährlichkeit des Fehlerstroms überwacht, wie dies bereits anhand von Kästchen 32 im vorhergehenden ausführlich erörtert wurde.

Um das oben genannte Problem bezüglich Fehlerströmen mit Frequenzen zwischen aufeinanderfolgenden Vielfachen der Netzfrequenz mittels einer "Abbildung" beheben zu können, müssen zwei direkt benachbarte Spektrallinien so miteinander verrechnet bzw. kombiniert werden, daß ein 50 Hz breiter Bereich mit im wesentlichen 'konstanter' Amplitude entsteht. Dieser Bereich mit im wesentlichen konstanter Amplitude kann dann für den eigentlichen Schwellwertvergleich genutzt werden. Außerhalb des konstanten Bereiches soll die Amplitude dagegen möglichst schnell auf einen Wert von 0 (Null) abfallen, damit eine gezielte spektrale Bewertung möglich bleibt.

Das Ergebnis der Verrechnung darf aber nicht von der Phasenlage der einzelnen Signale abhängen. Es können deshalb Real- and Imaginärteil der betrachteten Spektrallinien nicht ohne genaue Prüfung des Resultates bei der Verrechnung verwendet werden.

Eine gemäß der vorliegenden Erfindung bevorzugte Realisierung einer Verrechnung bzw. Kombination von Spektralamplituden, die benachbarten Spektrallinien zugeordnet sind, besteht nun darin, die beiden Beträge (Betragsquadrate) von jeweils benachbarten Spektrallinien zu kombinieren und vorzugsweise zu addieren (Kästchen 30 des Flußdiagramms von Fig. 1). Man erhält damit spektrale Bereiche zwischen jeweils benachbarten Spektrallinien, d. h. zwischen benachbarten Spektrallinien mit einem ganzzahligen Vielfachen der Netzgrundfrequenz, mit einer näherungsweise konstanten Empfindlichkeit für frequenzunabhängige Abschaltgrenzen innerhalb dieser spektralen Bereiche.

Ein relativ einfach zu realisierender Ansatz, um diesen Bereich mit möglichst konstanter Amplitude zu erreichen, ist über die folgende Beziehung der Addition der Betragsquadraten möglich:

$$B(k)^2 = k_1 \cdot \left( RE(k)^2 + IM(k)^2 \right) + k_2 \cdot \left( RE(k+1)^2 + IM(k+1)^2 \right)$$

Dieser relativ einfache Ansatz verknüpft die Betragsquadrate von zwei benachbarten Spektrallinien (k; k+1), die ein ganzzahliges Vielfaches der Netzfrequenz aufweisen. Es sollte beachtet werden, daß die oben genannte Verknüpfung nur beispielhaft für die vorliegende Erfindung gewählt ist und prinzipiell jede andere geeignete Verknüpfung, mit der ein Bereich mit möglichst konstanter Amplitude erreicht werden kann, eingesetzt werden kann. Dabei ist jedoch zu beachten, daß die Anforderungen z. B. an die Rechenleistung usw. der jeweiligen Elektronikkomponenten, die zum Durchführen des erfindungsgemäßen Verfahrens verwendet werden, erheblich ansteigen, wenn eine mathematisch aufwendigere Verknüpfung gewählt wird.

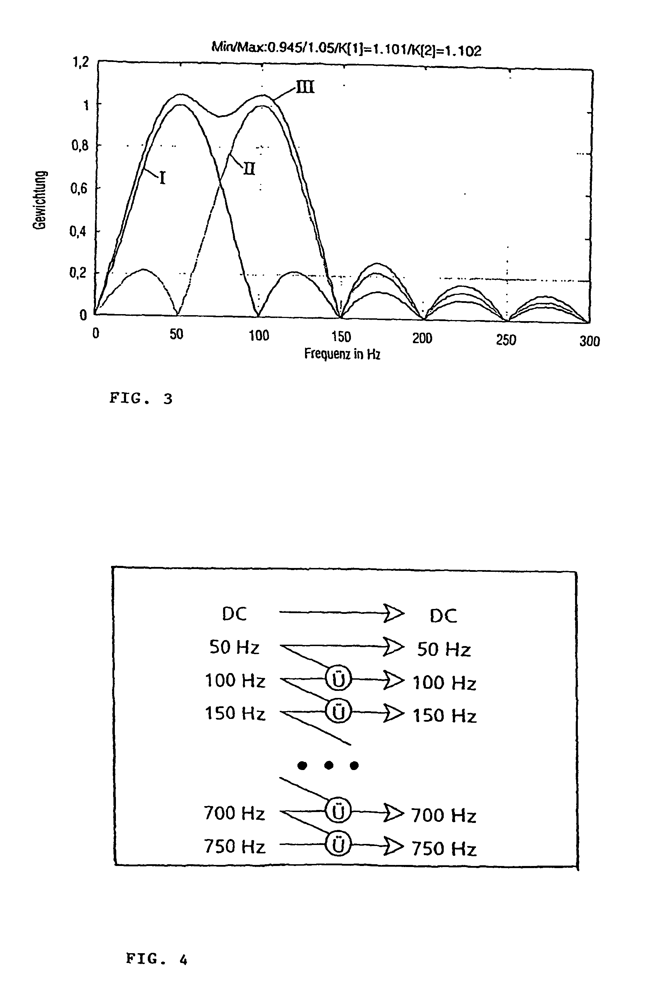

Die spektrale Gewichtung zwischen zwei benachbarten Spektrallinien ist in Fig. 3 anhand der Verläufe I, II und III prinzipiell dargestellt, wobei der Verlauf I den Betrag der 50Hz-Spektrallinie, der Verlauf II den Betrag der 100Hz-Spektrallinie und der Verlauf III die Verknüpfung der Betragsquadrate der beiden Spektrallinien darstellt.

Ideal wäre eine Betragsfunktion, die im Bereich zwischen 50 and 100 Hz genau einen Wert von 1 and außerhalb eine Wert von 0 aufweist. Mit der Verknüpfung der Betragsquadrate erhalt man aus den beiden Spektrallinien (Verlauf I, II) die Betragsfunktion (Verlauf III). Die verbleibende Restwelligkeit im Betrag liegt in diesem Fall bei etwa maximal ±5%.

Der resultierende Wert der Erfassungsempfindlichkeit für Fehlerströme ist bei einer Addition also ein gutes Maß für die vorhandene Signalamplitude zwischen den beiden benachbarten diskreten Frequenzen. Die Unsicherheit von maximal etwa ±5% macht sich in der synchronen Betriebsart praktisch nicht bemerkbar, führt aber bei einem asynchronen Betrieb zu einer zusätzlichen Unsicherheit bei der Auswertung der Abschaltschwelle.

Gemäß der vorliegenden Erfindung erhält man mit der Betragsfunktion (Verlauf III) eine Aussage über die Summe der vorhandenen Signalamplituden in dem Intervall zwischen den benachbarten Frequenzen, d. h. zwischen benachbarten Spektrallinien mit einem ganzzahligen Vielfachen der Netzgrundfrequenz, die beispielsweise 50 Hz beträgt.

Die Unterdrückung von Frequenzanteilen außerhalb des betrachteten 50Hz-Fensters wird durch die gewählte Verknüpfung nur unwesentlich schlechter. Wenn eine weitere Fehlerstromlinie im ungünstigsten Teil der direkt benachbarten Spektrallinie liegt, wird sie immer noch mit einem Faktor von zumindest 3 unterdrückt.

Diese Form der Überlappung kann im Prinzip bei allen Wechselstromanteilen beginnend bei 50 Hz bis einschließlich der 750Hz-Linie durchgeführt werden. Durch das Addieren von zwei Spektrallinien wird aber der Signal zu Rauschabstand deutlich verschlechtert. Das Rauschen nimmt um den Faktor $\sqrt{2}$ zu, während das Signal (bestehend aus einer Linie) unverändert bleibt.

Bei der feinsten Schwelle (50 Hz) kann dies dahingehend ein Problem darstellen, daß der Rauschabstand dann nicht mehr genügend groß ist, um eine Abschaltschwelle für den Fehlerstrom von beispielsweise 10 mA realisieren zu können. Deshalb muß der 50Hz-Entscheider mit der feinsten Schwelle direkt den nicht überlappten Wert aus der Fourier-Transformation (FFT) verwenden. Damit aber der Bereich zwischen 50 Hz and 100 Hz nicht falsch bewertet wird, muß der Überlappungswert trotzdem berechnet werden. Dieser Überlappungswert wird nicht in der vormals 50Hz-Linie abgespeichert, sondern in der 100Hz-Linie.

Die gesamte Abbildung, die durch eine Überlappung vorgenommen wird, ist beispielhaft in Fig. 4 dargestellt.

Durch diese Maßnahme ist es nun möglich die 50Hz-Schwelle niedriger zu setzten als den Schwellwert zwischen 50 Hz und 100 Hz. Bei der 50Hz-Linie liegt man damit in einem Bereich der durch die Bandbreite von 50 Hz vorgegebenen thermischen Rauschgrenze. Alle anderen (höherfrequenten Linien) besitzen eine effektive Rauschbandbreite von 100 Hz und sind demnach um den Faktor $\sqrt{2}$ schlechter als die 50Hz-Linie.

Bei der vorliegenden Erfindung wird dann also der erhaltene Summenwert der in dem Intervall zwischen den beiden benachbarten Frequenzen vorhandenen Signalamplituden beispielsweise durch einen Komparator auf das Überschreiten einer bestimmten Grenze hin überwacht (vgl. Kästchen 32). Es ist dabei gemäß der vorliegenden Erfindung möglich, unterschiedliche Abschaltschwellen für unterschiedliche Frequenzbereiche zu realisieren. Damit können hochfrequente Fehlerströme, die von geschalteten Elementen herrühren, schwächer gewichtet werden, um die Häufigkeit von Fehlauslösungen zu reduzieren, ohne die Sicherheit für den Menschen zu verringern. Mit der erfindungsgemäßen Fehlerstromüberwachung können somit auch Fehlerströme sicher und zuverlässig bewertet werden, deren Frequenz nicht mit einem ganzzahligen Vielfachen der Netzfrequenz übereinstimmt.

Mit dem erfindungsgemäßen Verfahren, das anhand Fig. 1 beschrieben wurde, ist es nun auch möglich, gezielt Gleichströme zu erfassen und zu bewerten, da bei der Signalerfassung durch einzelne Sensoren nun gemäß der vorliegenden Erfindung gleichstromfähige Sensoren verwendet werden können.

Die Fourier-Transformation (FFT) liefert den entsprechenden Gleichanteil, den man entweder mit der 50Hz-Linie überlappen kann oder einfach direkt separat als Gleichstromkomponente (DC) einer Grenzwertbetrachtung unterziehen kann. Dies erfolgt analog wie bei allen anderen Spektrallinien. Eine Wirk-/Blindstrom-Unterteilung gibt es bei der Grenzwertbetrachtung einer Gleichstromkomponente (DC) natürlich nicht.

Mit der Möglichkeit, beliebige spektrale Gewichtungsfunktionen realisieren zu können, ist es auch möglich, die Kennlinie der physiologischen Gefährdung des Menschen in Abhängigkeit von der Frequenz nachzubilden. Wenn dies durchgeführt wird, so kombiniert man eine hohe Sicherheit für den Menschen mit einer optimal niedrigen Häufigkeit für Fehlauslösungen und damit einer hohen Akzeptanz des Schutzsystems.

Gemäß der vorliegenden Erfindung können beispielsweise für jede der berechneten Spektrallinien zwei Gewichtungsfaktoren (je einer für Wirk- und Blindanteil) und ein Abschaltgrenzwert für den Betrag vorgegeben werden. Durch die Möglichkeit, die Grenzwerte aufgrund der gemessenen vorhandenen Spektrallinien noch im Betrieb anpassen zu können, kann eine optimale Schutzwirkung bei gleichzeitig niedriger Anzahl an Fehlauslösungen erreicht werden.

Wie in dem Kästchen 32 von Fig. 1 dargestellt ist, wird im Fall einer Grenzwertüberschreitung eine vorgegebene Aktion ausgeführt, wobei als Aktion eine optische oder akustische Warnmeldung generiert werden kann, eine Meldung über ein entsprechendes Netzwerk übermittelt werden kann oder direkt eine Schutzfunktion, z. B. ein allpoliges Abschalten, ausgelöst werden kann.

In der Praxis ist es von Vorteil, die Stromspektrallinie, die direkt auf der Netzfrequenz, z. B. bei 50 Hz, liegen, zusätzlich direkt (ohne eine Abbildung) auf eine separate Grenzwertüberwachung zu geben, um diese Hauptlinie besonders gut und ungestört von den Nachbarlinien überwachen zu können. Dies ist insbesondere dann sinnvoll, wenn die Netzfrequenz in einem physiologisch sehr ungünstigen Frequenzbereich liegt.

Ein Hauptvorteil der vorliegenden Erfindung gegenüber dem bisherigen Stand der Technik liegt also darin, daß mit dem erfindungsgemäßen Verfahren zur Fehlerstromüberwachung in einem elektrischen Wechselstromnetz mit einer vorgegebenen Netzfrequenz jetzt eine entsprechend den physiologischen Erkenntnissen gezielte Bewertung des Gefährdungspotentials aller Spektralanteile von zu überwachenden Strömen möglich ist. Damit ist eine größtmögliche Sicherheit für den Anwender mit einer geringst möglichen Anzahl an Fehlauslösungen vereinbar.

Selbst bei kritischen Anwendungen, z. B. wenn systembedingt hohe Fehlerströme auf bestimmten Frequenzen auftreten, wie z. B. bei einer PWM-Frequenz bei Drehstromantrieben, bei denen eine Schutzfunktion bislang nicht mehr ausreichend gewährleistet werden konnte, kann mit dem erfindungsgemäßen Verfahren noch ein ausreichend guter Schutz erreicht werden, indem die betreffende(n) Frequenz(en), d. h. ausschließlich diese, komplett ausgeblendet und geringer gewichtet werden. Solange sich die problematischen Wirkstromanteile nicht auf der Netzfrequenzlinie von beispielsweise 50 Hz befinden, kann trotzdem weitestgehend ein wirksamer Schutz für Menschen erhalten werden.

**Patentansprüche**

1. Verfahren zur Fehlerstromüberwachung in einem elektrischen Wechselstromnetz mit einer vorgegebenen Netzfrequenz, mit folgenden Schritten:

    Erfassen (12a-d) von Stromwerten von zu überwachenden elektrischen Strömen,

    Umwandeln (14) der erfaßten Stromwerte in digitalisierte Stromwerte,

    Berechnen (16) von Summenstromwerten aus den digitalisierten Stromwerten,

    Bilden (18) von Blöcken aus den Summenstromwerten in Abhängigkeit von der Phasenlage eines Netzspannungssignals,

    Spektrales Zerlegen (24) der Blöcke in spektrale Anteile, und

    Überwachen (32) der spektralen Anteile der Blöcke hinsichtlich eines Überschreitens spektraler Grenzwerte zur Bewertung der Gefährlichkeit des Fehlerstroms.

2. Verfahren nach Anspruch 1, bei dem nach dem Zerlegen (24) der Blöcke in spektrale Anteile eine Korrektur (30) der Erfassungsempfindlichkeit für Fehlerströme mit Frequenzen zwischen aufeinanderfolgenden Vielfachen der Netzfrequenz vorgenommen wird, indem Spektralamplitudenwerte, die den benachbarten Spektrallinien zugeordnet sind, miteinander kombiniert werden.

3. Verfahren nach Anspruch 2, bei dem die kombinierten Spektralamplitudenwerte zur Bewertung der Gefährlichkeit eines Fehlerstroms verwendet werden.

4.  Verfahren nach Anspruch 2 oder 3, bei dem die Betragsquadrate von Spektralamplitudenwerten, die den benachbarten Spektrallinien zugeordnet sind, addiert werden.

5.  Verfahren nach Anspruch 4, bei dem die addierten Spektralamplitudenwerte zur Bewertung der Gefährlichkeit des Fehlerstroms verwendet werden.

6.  Verfahren nach einem der vorhergehenden Ansprüche, bei dem das spektrale Zerlegen (24) der Blöcke mittels einer diskreten Fourier-Transformation vorgenommen wird.

7.  Verfahren nach einem der vorhergehenden Ansprüche, bei dem die spektralen Anteile mittels frequenzabhängiger Gewichtungsvorgaben gewichtet werden (26).

8.  Verfahren nach Anspruch 7, bei dem eine unterschiedliche Gewichtung (26) von Realteil und Imaginärteil der spektralen Anteile vorgenommen wird.

9.  Verfahren nach Anspruch 8, bei dem eine unterschiedliche Gewichtung von Realteil und Imaginärteil der spektralen Anteile vorgenommen wird, um eine Bewertung des Gefahrenpotentials des Fehlerstroms hinsichtlich physiologischer Vorgaben und/oder Materialschutzvorgaben in Abhängigkeit der Frequenz vorzunehmen.

10.  Verfahren nach einem der vorhergehenden Ansprüche, bei dem die Blöcke aus den Summenstromwerten in Abhängigkeit von der Phasenlage eines Netzspannungssignals gebildet werden, wobei die Phasenlage aus zwei gleichartigen Nulldurchgängen des Netzspannungssignals erhalten wird.

11.  Vorrichtung zur Fehlerstromüberwachung in einem elektrischen Wechselstromnetz mit einer vorgegebenen Netzfrequenz, mit folgenden Merkmalen:

    einer Einrichtung zum Erfassen von Stromwerten von zu überwachenden, elektrischen Strömen,

    einer Einrichtung zum Umwandeln der erfaßten Stromwerte in digitalisierte Stromwerte,

    einer Einrichtung zum Berechnen von Summenstromwerten aus den digitalisierten Stromwerten,

    einer Einrichtung zum Bilden von Blöcken aus den Summenstromwerten in Abhängigkeit von der Phasenlage eines Netzspannungssignals,

    einer Einrichtung zum spektralen Zerlegen der Blöcke in spektrale Anteile, und

    einer Einrichtung zum Überwachen der spektralen Anteile der Blöcke hinsichtlich eines Überschreitens spektraler Grenzwerte zur Bewertung der Gefährlichkeit des Fehlerstroms.

12.  Vorrichtung nach Anspruch 11, bei der nach dem Zerlegen (24) der Blöcke in spektrale Anteile eine Korrektur (30) der Erfassungsempfindlichkeit für Fehlerströme mit Frequenzen zwischen aufeinanderfolgenden Vielfachen der Netzfrequenz vorgenommen wird, indem Spektralamplitudenwerte, die den benachbarten Spektrallinien zugeordnet sind, miteinander kombiniert werden.

13.  Vorrichtung nach Anspruch 12, bei der die kombinierten Spektralamplitudenwerte zur Bewertung der Gefährlichkeit eines Fehlerstroms verwendet werden.

14.  Vorrichtung nach Anspruch 12 oder 13, bei der die Betragsquadrate von Spektralamplitudenwerten, die den benachbarten Spektrallinien zugeordnet sind, addiert werden.

15.  Vorrichtung nach Anspruch 14, bei der die addierten Spektralamplitudenwerte zur Bewertung der Gefährlichkeit des Fehlerstroms verwendet werden.

16.  Vorrichtung nach einem der Ansprüche 11 - 15, bei der das spektrale Zerlegen (24) der Blöcke mittels einer diskreten Fourier-Transformation erfolgt.

17. Vorrichtung nach einem der Ansprüche 11 - 16, bei der die spektralen Anteile mittels frequenzabhängigen Gewichtungsvorgaben gewichtet werden (26).

18. Vorrichtung nach Anspruch 17, bei der eine unterschiedliche Gewichtung (26) von Realteil und Imaginärteil der spektralen Anteile vorgenommenen wird.

19. Vorrichtung nach Anspruch 18, bei der eine unterschiedliche Gewichtung von Realteil und Imaginärteil der spektralen Anteile vorgenommen wird, um eine Bewertung des Gefahrenpotentials des Fehlerstroms hinsichtlich physiologischer Vorgaben und/oder Materialschutzvorgaben in Abhängigkeit der Frequenz vorzunehmen.

20. Vorrichtung nach einem der Ansprüche 11 - 19, bei der die Blöcke aus den Summenstromwerten in Abhängigkeit von der Phasenlage eines Netzspannungssignals gebildet werden, wobei die Phasenlage aus zwei gleichartigen Nulldurchgängen des Netzspannungssignals erhalten wird.

## Claims

1. A method for fault-current monitoring in an electric alternating current network with a predetermined network frequency, comprising:

   detecting (12a-d) of current values of electrical currents to be monitored,

   converting (14) the detected current values into digitized current values,

   calculating (16) of sum current values from the digitized current values,

   forming (18) of blocks from the sum current values dependent on the phase position of a network voltage signal,

   spectral breaking down (24) of the blocks into spectral proportions, and

   monitoring (32) the spectral proportions of the blocks with regard to an exceeding of spectral limit values for evaluating the danger of the fault current.

2. The method according to claim 1, wherein after breaking down (24) the blocks into spectral proportions a correction (30) of the detection sensitivity for fault currents with frequencies between subsequent multiples of the network frequency is performed by combining spectral amplitude values with each other which are associated with the neighboring spectral lines.

3. The method according to claim 2, wherein the combined spectral amplitude values are used for an assessment of the danger of a fault current.

4. The method according to claim 2 or 3, wherein the amount squares of spectral amplitude values associated with the neighboring spectral lines are added.

5. The method according to claim 4, wherein the added spectral amplitude values are used for evaluating the danger of the fault current.

6. The method according to one of the preceding claims, wherein the spectral breaking down (24) of the blocks is performed by means of a discrete Fourier transformation.

7. The method according to one of the preceding claims, wherein the spectral proportions are weighted (26) by means of frequency-dependent weighting preconditions.

8. The method according to claim 7, wherein a different weighting (26) of the real part and imaginary part of the spectral proportions is performed.

9. The method according to claim 8, wherein a different weighting of the real part and imaginary part of the spectral proportions is performed in order to perform an evaluation of the danger potential of the fault current with regard to physiological preconditions and/or material protection preconditions depending on the frequency.

10. The method according to one of the preceding claims, wherein the blocks of the sum current values are formed dependent on the phase position of a network voltage signal, wherein the phase position is obtained from two uniform zero crossings of the network voltage signal.

11. A device for a fault-current monitoring in an electric alternating current network with a predetermined network frequency, comprising:

> means for detecting current values of electrical currents to be monitored,

> means for converting the detected current values into digitized current values,

> means for calculating sum current values from the digitized current values,

> means for forming blocks from the sum current values depending on the phase position of a network voltage signal,

> means for spectrally breaking down the blocks into spectral proportions, and

> means for monitoring the spectral proportions of the blocks with regard to an exceeding of spectral limit values for evaluating the danger of the fault current.

12. The device according to claim 11, wherein after breaking down (24) the blocks into spectral proportions a correction (30) of the detection sensitivity for fault currents is performed with frequencies between subsequent multiples of the network frequency by combining spectral amplitude values with each other which are associated with the neighboring spectral lines.

13. The device according to claim 12, wherein the combined spectral amplitude values are used for evaluating the danger of a fault current.

14. The device according to claim 12 or 13, wherein the amount squares of spectral amplitude values associated with the neighboring spectral lines are added.

15. The device according to claim 14, wherein the added spectral amplitude values are used for evaluating the danger of the fault current.

16. The device according to one of claims 11 to 15, wherein the spectral breaking down (24) of the blocks is performed by means of a discrete Fourier transformation.

17. The device according to one of claims 11 to 16, wherein the spectral proportions are weighted (26) by means of frequency-dependent weighting preconditions.

18. The device according to claim 17, wherein a different weighting (26) is performed by the real part and the imaginary part of the spectral proportions.

19. The device according to claim 18, wherein a different weighting of the real part and imaginary part of the spectral proportions is performed in order to perform an evaluation of the danger potential of the fault current with regard to physiological preconditions and/or material protection preconditions depending on the frequency.

20. The device according to one of claims 11 to 19, wherein the blocks from the sum current values are formed depending on the phase position of a network voltage signal, wherein the phase position is obtained from two uniform zero crossings of the network voltage signal.

**Revendications**

1. Procédé de surveillance du courant de perte dans un réseau de courant électrique alternatif à fréquence de réseau prédéterminée, aux étapes suivantes consistant à :

détecter (12a à d) des valeurs de courants électriques à surveiller,
convertir (14) les valeurs de courant détectées en valeurs de courant numérisées,
calculer (16) des valeurs de courant de somme à partir des valeurs de courant numérisées,
former (18) des blocs à partir des valeurs de courant de somme en fonction de la position de phase d'un signal de tension de réseau,
décomposer spectralement (24] les blocs en parts spectrales, et
surveiller (32) les parts spectrales des blocs quant à un dépassement de valeurs spectrales limites, en vue de l'évaluation de la nature dangereuse du courant de perte.

2. Procédé selon la revendication 1, dans lequel il est procédé, après la décomposition (24) des blocs en parts spectrales, à une correction (30) de la sensibilité de détection de courants de perte à fréquences comprises entre des multiples successifs de la fréquence de réseau, en combinant l'une avec l'autre les valeurs d'amplitude spectrales associées aux lignes spectrales adjacentes.

3. Procédé selon la revendication 2, dans lequel les valeurs d'amplitude spectrales combinées sont utilisées pour l'évaluation de la nature dangereuse d'un courant de perte.

4. Procédé selon la revendication 2 ou 3, dans lequel les carrés des valeurs d'amplitude spectrales associées aux lignes spectrales adjacentes sont additionnés.

5. Procédé selon la revendication 4, dans lequel les valeurs d'amplitude spectrales additionnées sont utilisées pour l'évaluation de la nature dangereuse du courant de perte.

6. Procédé selon l'une des revendications précédentes, dans lequel il est procédé à la décomposition spectrale (24) des blocs au moyen d'une transformation de Fourier discrète.

7. Procédé selon l'une des revendications précédentes, dans lequel les parts spectrales sont pondérées au moyen de conditions de pondération prédéterminées fonction de la fréquence (26).

8. Procédé selon la revendication 7, dans lequel il est procédé à une pondération différente (26) de la partie réelle et de la partie imaginaire des parts spectrales.

9. Procédé selon la revendication 8, dans lequel il est procédé à une pondération différente de la partie réelle et de la partie imaginaire des parts spectrales, pour procéder à une évaluation du potentiel de danger du courant de perte en ce qui concerne les conditions physiologiques et/ou les conditions de protection du matériel en fonction de la fréquence.

10. Procédé selon l'une des revendications précédentes, dans lequel les blocs sont formés à partir des valeurs de courant de somme en fonction de la position de phase d'un signal de tension de réseau, la position de phase étant obtenue à partir de deux passages à zéro similaires du signal de tension de réseau.

11. Dispositif de surveillance du courant de perte dans un réseau de courant électrique alternatif à fréquence de réseau prédéterminée, aux caractéristiques suivantes :

un dispositif destiné à détecter des valeurs de courants électriques à surveiller,
un dispositif destiné à convertir les valeurs de courant détectées en valeurs de courant numérisées,
un dispositif destiné à calculer des valeurs de courant de somme à partir des valeurs de courant numérisées,
un dispositif destiné à former des blocs à partir des valeurs de courant de somme en fonction de la position de phase d'un signal de tension de réseau,
un dispositif destiné à décomposer spectralement les blocs en parts spectrales, et
un dispositif destiné à surveiller les parts spectrales des blocs quant à un dépassement de valeurs spectrales limites, en vue d'évaluer la nature dangereuse du courant de perte.

12. Dispositif selon la revendication 11, dans lequel il est procédé, après la décomposition (24) des blocs en parts spectrales, à une correction (30) de la sensibilité de détection des courants de perte à fréquences comprises entre des multiples successifs de la fréquence de réseau, en combinant l'une avec l'autre des valeurs d'amplitude spectrales associées aux lignes spectrales adjacentes.

**13.** Dispositif selon la revendication 12, dans lequel les valeurs d'amplitude spectrales combinées sont utilisées pour l'évaluation de la nature dangereuse d'un courant de perte.

**14.** Dispositif selon la revendication 12 ou 13, dans lequel les carrés des valeurs d'amplitude spectrales associées aux lignes spectrales adjacentes sont additionnés.

**15.** Dispositif selon la revendication 14, dans lequel les valeurs d'amplitude spectrales additionnées sont utilisées pour évaluer la nature dangereuse du courant de perte.

**16.** Dispositif selon l'une des revendications 11 à 15, dans lequel la décomposition spectrale (24) des blocs a lieu au moyen d'une transformation de Fourier discrète.

**17.** Dispositif selon l'une des revendications 11 à 16, dans lequel les parts spectrales sont pondérées au moyen de conditions de pondération prédéterminées fonction de la fréquence (26).

**18.** Dispositif selon la revendication 17, dans lequel il est procédé à une pondération différente (26) de la partie réelle et de la partie imaginaire des parts spectrales.

**19.** Dispositif selon la revendication 18, dans lequel il est procédé à une pondération différente de la partie réelle et de la partie imaginaire des parts spectrales, pour procéder à une évaluation du potentiel de danger du courant de perte par rapport à des conditions physiologiques prédéterminées et/ou des conditions de protection de matériel prédéterminées en fonction de la fréquence.

**20.** Dispositif selon l'une des revendications 11 à 19, dans lequel les blocs sont formés à partir des valeurs de courant de somme en fonction de la position de phase d'un signal de tension de réseau, la position de phase étant obtenue à partir de deux passages à zéro similaires du signal de tension de réseau.

**FIG. 1**

**FIG. 2**

Min/Max:0.945/1.05/K[1]=1.101/K[2]=1.102

FIG. 3

FIG. 4